# EUROPÄISCHE PATENTSCHRIFT

(11) **EP 2 368 059 B1**
(45) Veröffentlichungstag und Bekanntmachung des Hinweises auf die Patenterteilung: **21.10.2015**
(21) Anmeldenummer: 09760762.6
(22) Anmeldetag: 25.11.2009
(51) Int. Cl.: F16H 61/4096, F16H 61/448, B60K 6/12

(54) **HYDROSTATISCHES ANTRIEBSSYSTEM**
HYDROSTATIC DRIVE SYSTEM
SYSTÈME D'ENTRAÎNEMENT HYDROSTATIQUE

(30) Priorität: 23.12.2008 DE 102008062836
(43) Veröffentlichungstag der Anmeldung: 28.09.2011
(73) Patentinhaber: Hydac Technology Gmbh, 66280 Sulzbach / Saar (DE)
(72) Erfinder: BALTES, Herbert, 66679 Losheim (DE); BAUER, Frank, 66646 Marpingen (DE)
(74) Vertreter: Bartels, Martin Erich Arthur
(86) Internationale Anmeldenummer: PCT/EP2009/008406
(87) Internationale Veröffentlichungsnummer: WO 2010/072299

(56) Entgegenhaltungen:
- EP-A1- 1 898 131
- FR-A1- 2 520 827
- US-A- 4 098 083

## Beschreibung

Die Erfindung betrifft ein hydrostatisches Antriebssystem gemäß der Merkmalsausgestaltung des Oberbegriffes des Patentanspruches 1.

Hydrostatische Antriebe dieser Art, wie sie beispielsweise in dem Dokument WO 2007/079935 A1 aufgezeigt sind, werden häufig in Nutzfahrzeugen wie Bussen oder mobilen Arbeitsgeräten verwendet. Diese Antriebssysteme bieten die Möglichkeit, während Bremsvorgängen einen Teil der kinetischen Energie als Druckenergie zu speichern und anschließend zurückzugewinnen, um Beschleunigungsvorgänge zu unterstützen. Diesbezüglich ist es Stand der Technik, für zumindest eine Antriebseinheit einen Hydromotor in Form einer verstellbaren Motor-Pumpen-Einheit auszubilden, so dass der Hydromotor bei einem Schiebebetrieb des Antriebssystemes Druckmittel fördert. Das Fördervolumen wird als Ladevolumen dem Hochdruckspeicher zugeführt, wobei sich sowohl eine Bremswirkung in der Antriebseinheit ergibt als auch eine Speicherung von Druckenergie im Hochdruckspeicher. Diese Energie ist rückzugewinnen, indem für Beschleunigungsvorgänge der Hochdruckspeicher mit der beim Antriebszustand der Förderseite zugeordneten Arbeitsleitung verbunden wird. Beim jeweiligen Arbeitsspiel für Beschleunigen und Bremsen ist jeweils der zweite Hydrospeicher, der Niederdruckspeicher, mit einer der Arbeitsleitungen zum Ausgleich der der jeweils anderen Arbeitsleitung zugeführten oder entnommenen Volumina verbunden.

Durch die FR 2 520 827 A1 ist ein hydrostatisches Antriebssystem, insbesondere für Fahrantriebe, bekannt mit einer motorisch antreibbaren Hydropumpe, die unter Bildung eines hydraulischen Kreislaufes über eine erste und eine zweite Arbeitsleitung mit zumindest einer hydraulischen Antriebseinheit verbindbar ist, die mit einem Radsatz verbunden ist, mit einem ersten Hydrospeicher zum Speichern von Druckenergie, der mit einer der Arbeitsleitungen verbindbar ist, und mit einem mit der jeweils anderen Arbeitsleitung verbindbaren zweiten Hydrospeicher, der als druckloser "Sumpf", einer Hydropumpe ausgebildet nicht zur Energiespeicherung geeignet ist, und wobei der dahingehende "Sumpf" auch nicht dergestalt mittels einer Ventileinrichtung auftrennbar ist, um von dem die Hydropumpe enthaltenden Teil des Kreislaufes, deren Speicherteil (Sumpf) abzutrennen.

Zwar ist es mit dieser bekannten Lösung möglich, für den Fahrantrieb sowohl einen reinen Traktionsbetrieb als auch einen solchen mit Rückgewinnung sowie eine Bremsung mit Rückgewinnung und eine Traktion mit Wiedergabe vorzusehen, was aber nur mit der genannten komplex aufbauenden Ventileinrichtung erreicht ist, und im Übrigen lässt die Effizienz der Rückgewinnung aus dem "Sumpf" der Hydropumpe Wünsche offen, da dieser weder als Energiespeicher dient, noch zusammen mit dem Hochdruckspeicher gemeinsam und zeitgleich zuschaltbar ist.

Durch die EP 1 898 131 A1 ist ein gattungsgemäßes hydrostatisches Antriebssystem bekannt. Bei dieser bekannten Lösung sind zwei gesonderte hydraulische Antriebseinheiten als jeweilige Pumpen-Motor-Einheit ausgebildet, die über ein Getriebe miteinander in Wirkverbindung stehen, das seine Abtriebsleistung an einen Radsatz eines Fahrzeuges abgibt. Ferner sind die beiden Antriebseinheiten voneinander getrennt über entsprechende Arbeitsleitungen und eine Ventileinrichtung auf der einen Seite mit einem Hochdruckspeicher und auf der anderen Seite mit einem Niederdruckspeicher, die jeweils als konventioneller Hydrospeicher ausgebildet sind, verbindbar.

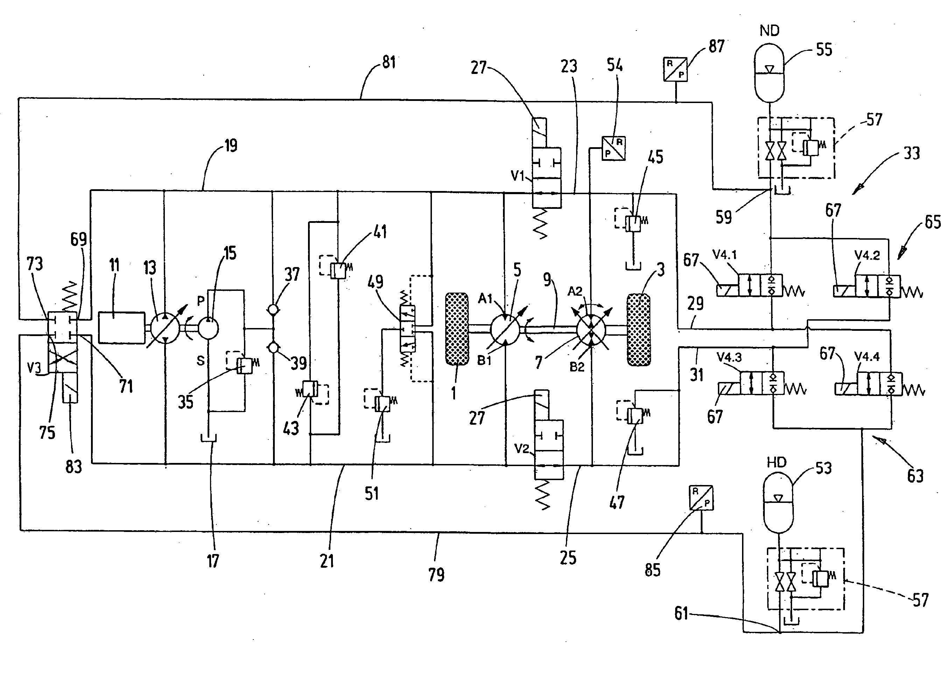

Bei der bekannten Lösung (vgl. Fig. 1 und 2) ist jede Antriebseinheit mittels zweier eigenständiger Arbeitsleitungen mit einem Ventilblock als Bestandteil einer Ventileinrichtung verbunden, wobei jeder Ventilblock in der Art einer Graetzschaltung aufgebaut ist, die vier in einer Schaltstellung paarweise gegenläufig sperrbare Rückschlagventile beinhaltet. Zwar stehen die beiden Ventileinrichtungen in Form der Ventilblöcke sowohl auf der einen Seite mit einem Hochdruckspeicher als auf der anderen Seite mit einem Niederdruckspeicher über weitere Arbeitsleitungen in Verbindung, allein ein jeweils zwischen den Antriebseinheiten unmittelbar verlaufender Abschnitt der genannten Arbeitsleitungen ist nicht vorhanden und kann mittels der Ventileinrichtung weder angesteuert und insoweit auch nicht aufgetrennt werden.

Neben dem bereits aufgezeigten komplizierten Ventilaufbau ist darüber hinaus eine elektronische Steuereinheit zur selektiven Erzeugung von Befehlssignalen sowohl für den Betrieb der Antriebseinheiten als auch für die Ventileinheiten notwendig, wobei die Befehlssignale aus mittels Sensoren erfassten Beschleunigungswerten der Gesamt-Antriebsgruppe erst generiert werden müssen, was die Störanfälligkeit der bekannten Lösung erhöht.

Im Hinblick auf diesen Stand der Technik liegt der Erfindung die Aufgabe zugrunde, ein Antriebssystem der betrachteten Art zur Verfügung zu stellen, das sich nicht nur durch einen besonders einfachen Aufbau des hydraulischen Kreislaufes, sondern gleichzeitig durch ein gegenüber dem Stand der Technik verbessertes Betriebsverhalten auszeichnet.

Erfindungsgemäß ist diese Aufgabe durch ein hydrostatisches Antriebssystem gelöst, das die Merkmale des Patentanspruches 1 in seiner Gesamtheit aufweist.

Demgemäß besteht eine wesentliche Besonderheit der Erfindung darin, dass mittels einer Ventileinrichtung der jeweils zwischen den Antriebseinheiten verlaufende Abschnitt jeder Arbeitsleitung auftrennbar ist. Durch das Auftrennen dieser Abschnitte beider Arbeitsleitungen wird der hydraulische Kreislauf in zwei Teilkreisläufe unterteilt, nämlich in einen die Hydropumpe enthaltenden Teil des Kreislaufes und einen Speicherteil, der die zumindest eine Antriebseinheit und die Hydrospeicher enthält. Im normalen Antriebszustand, also ohne Beschleunigungs- oder Bremsvorgang, ist keine Unterbrechung der Arbeitsleitungen zu der Antriebseinheit vorgesehen, so dass die Antriebseinheit von der Hydropumpe über die Arbeitsleitungen versorgt wird. Soll ein Beschleunigungs- oder Bremsvorgang erfolgen, werden durch die Ventileinrichtung die Verbindungen zu der Antriebseinrichtung aufgetrennt. Dies bedeutet, dass vom hydraulischen Kreislauf der Speicherteil abgetrennt ist und für Beschleunigungs- und Bremsvorgänge daher lediglich der dem Speicherteil zugehörige Anteil an Leitungen und hydraulischen Komponenten beteiligt ist. Dadurch ergibt sich nicht nur der Vorteil eines guten Ansprechverhaltens aufgrund der Steifigkeit des lediglich den Speicherteil umfassenden Leitungssystems, wodurch auch Hystereseerscheinungen vermieden sind, sondern die Anordnung zeichnet sich auch durch geringe Strömungsverluste aufgrund der verringerten, von den beteiligten Volumina zu durchströmenden Leitungsvolumina aus. Im Gegensatz hierzu ist bei der erwähnten bekannten Lösung, bei der keine Abtrennung eines Speicherteiles, der lediglich bei Beschleunigung und Bremsen aktiv ist, vorgesehen ist, bei sämtlichen Betriebszuständen der gesamte Kreislauf aktiv und von Druckmittelvolumina zu durchströmen, wodurch sich entsprechende Verschiebeverluste und ein entsprechend träges Ansprechverhalten ergeben.

Bei Beschleunigungs- und Bremsvorgängen verbleibt nach Abtrennen des Speicherteiles im anderen Teilkreislauf, der als Versorgungsteil die Hydropumpe enthält, auch eine hydraulische Antriebseinheit, so dass bei Beschleunigungsvorgängen sowohl die dem Speicherteil zugehörige Antriebseinheit durch aus dem Hochdruckspeicher zurückgewonnene Energie unterstützt wird, als auch gleichzeitig die dem Versorgungsteil zugehörige Antriebseinheit von der Hydropumpe mit Antriebsenergie versorgt wird. Im Effekt ergibt sich somit eine Leistungsaddition aus der von der zurückgewonnenen Druckenergie stammenden Leistung und der von der Hydropumpe an die dem Versorgungskreis zugehörige Antriebseinheit gelieferten Energie.

Die Antriebseinheiten können unmittelbar mechanisch miteinander gekuppelt sein, wobei sich beispielsweise bei Fahrantrieben eine einfache Bauweise ergibt. Dies ist jedoch nicht zwingend. Eine funktionsmäßige Wirkverbindung könnte alternativ über Getriebe- und/oder Kupplungseinrichtungen erfolgen oder einfach in der Weise, dass einer oder mehrere Radsätze jeder Antriebseinheit auf einer gemeinsamen Lauf- oder Fahrbahn abrollen, die Antriebseinheiten also nicht getrieblich, sondern lediglich über das gemeinsame Abrollen auf gemeinsamer Laufbahn miteinander in Wirkverbindung sind.

Bei bevorzugten Ausführungsbeispielen weist die Ventileinrichtung, mittels deren der Speicherteil vom hydraulischen Kreislauf abtrennbar ist, in jeder Arbeitsleitung ein Wege-Schaltventil auf, die in den Öffnungszustand vorgespannt und durch elektromagnetische Betätigung in den Sperrzustand steuerbar sind.

Hinsichtlich des Speicherteiles kann die Anordnung so getroffen sein, dass der Speicherteil eine zweite Ventileinrichtung aufweist, die mit dem ersten Hydrospeicher, der als Hochdruckspeicher zum Speichern von Druckenergie dient, verbunden ist, und eine dritte Ventileinrichtung aufweist, die mit dem zweiten, als Niederdruckspeicher dienenden Hydrospeicher verbunden ist. Diese zweite und dritte Ventileinrichtung ermöglichen es, dass der Speicherteil, wenn kein Beschleunigungs- oder Bremsvorgang stattfindet, sozusagen inaktiv bleibt, indem, wenn keine Abtrennung des Speicherteiles stattfindet, beide Hydrospeicher mittels der im Sperrzustand befindlichen zweiten und dritten Ventileinrichtungen vom Kreislauf getrennt sind.

Dabei ist die Anordnung so getroffen, dass die zweite und die dritte Ventileinrichtung des Speicherteiles beide je ein Beschleunigungsventil aufweisen, die für einen Beschleunigungsvorgang in den Öffnungszustand steuerbar sind, um zur Rückgewinnung gespeicherter Druckenergie den Hochdruckspeicher mit der die Antriebs-Durckversorgung der dem Speicherteil zugehörigen Antriebseinheit bewirkenden ersten Arbeitsleitung zu verbinden und den Niederdruckspeicher mit der anderen, zweiten Arbeitsleitung zu verbinden. Weiterhin können die zweite und die dritte Ventileinrichtung des Speicherteiles beide je ein Bremsventil aufweisen, die für einen Bremsvorgang in den Öffnungszustand steuerbar sind, um zur Speicherung von Druckenergie die zweite Arbeitsleitung, d. h. die beim Schiebebetrieb der Förderseite der Antriebseinheit zugehörige Arbeitsleitung, mit dem Hochdruckspeicher und die andere, erste Arbeitsleitung mit dem Niederdruckspeicher zu verbinden.

Vorzugsweise sind sowohl Beschleunigungsventile als auch Bremsventile jeweils durch in den Sperrzustand vorgespannte und durch elektromagnetische Betätigung in den Öffnungszustand steuerbare Wegeventile gebildet. Ohne elektrische Ansteuerung ist daher der Speicherteil, einschließlich der Hydrospeicher, der den Hydrospeichern üblicherweise zugeordneten Sicherheitskomponenten und einschließlich der zweiten und der dritten Ventileinrichtung, hydraulisch vom übrigen Kreislauf separiert, der beim normalen Antriebszustand aktiv ist.

Nachstehend ist die Erfindung anhand eines in der Zeichnung dargestellten Ausführungsbeispieles im Einzelnen erläutert. Die einzige Figur zeigt in Symboldarstellung die hydraulische Schaltung des hier zu beschreibenden Beispieles des erfindungsgemäßen Antriebssystems.

Die Erfindung ist am Beispiel eines Fahrantriebes, der beispielsweise für einen Einsatz bei Bussen vorgesehen ist, beschrieben, wobei zwei Antriebseinheiten 5 und 7 mit je einem Radsatz 1 und 3 verbunden sind. Bei der ersten Antriebseinheit 5 handelt es sich um einen Kontantmotor, der entsprechend zweier Volumenstromrichtungen in zwei Drehrichtungen betreibbar ist. Die zweite Antriebseinheit 7 ist durch eine Verstell-MotorPumpe gebildet, ebenfalls für zwei Volumenstromrichtungen, entsprechend zwei Drehrichtungen. Beim vorliegenden Ausführungsbeispiel sind erste Antriebseinheit 5 und zweite Antriebseinheit 7 unmittelbar mechanisch über eine Verbindungswelle 9 gekuppelt.

Für die Energieversorgung des Systems ist ein Primärantrieb durch eine Verbrennungskraftmaschine, beim vorliegenden Ausführungsbeispiel in Form eines Dieselmotors 11, vorgesehen, der eine Hydropumpe 13 in Form einer Verstellpumpe antreibt, die bei gleicher Drehrichtung in zwei Volumenstromrichtungen fördern kann. Gemeinsam mit der Hydropumpe 13 ist eine Speisepumpe 15 in Form einer Konstantpumpe antreibbar, die, wie später noch besprochen, aus einem Tank 17 eine Nachspeisung des Systems mit Hydraulikflüssigkeit ermöglicht, um Leckverluste des Systems auszugleichen. An den beiden Anschlüssen der Hydropumpe 13 sind zur Bildung eines hydraulischen Kreislaufes eine erste Arbeitsleitung 19 und eine zweite Arbeitsleitung 21 angeschlossen, von denen die erste Arbeitsleitung 19 mit einem Anschluss A1 der ersten Antriebseinheit 5 und die zweite Arbeitsleitung 21 mit dem anderen Anschluss B1 der ersten Antriebseinheit 5 in Verbindung sind. Die Arbeitsleitung 19 setzt sich über einen Leitungsabschnitt 23 zum Anschluss A2 der zweiten Antriebseinheit 7 fort, während sich die zweite Arbeitsleitung 21 über einen Leitungsabschnitt 25 zum zweiten Anschluss B2 der zweiten Antriebseinheit 7 fortsetzt. In jedem dieser Leitungsabschnitte 23 und 25 befindet sich ein 2/2-Wegeventil V1 bzw. V2. Diese dienen als Schaltventile, die im Öffnungszustand den zugeordneten Leitungsabschnitt 23 bzw. 25 freigeben oder im Sperrzustand auftrennen. Die Wegeventile V1 und V2 sind mechanisch in den Öffnungszustand vorgespannt und durch elektrische Betätigung ihres Betätigungsmagneten 27 in den Sperrzustand überführbar.

An die Leitungsabschnitte 23 und 25 der Arbeitsleitungen 19 bzw. 21 schließt sich über Verbindungsleitungen 29 bzw. 31 ein als Ganzes mit 33 bezeichneter Speicherteil an, der den gesamten hydraulischen Kreislauf vervollständigt.

Die bereits erwähnte Speisepumpe 15, deren Förderseite durch ein Druckbegrenzungsventil 35 zur Tankseite hin abgesichert ist, ist förderseitig über Rückschlagventile 37 und 39 mit den Arbeitsleitungen 19 und 21 in Verbindung, um den Füllzustand des Systems zu erhalten. Hinsichtlich des im Betrieb herrschenden Systemdruckes sind zwischen den Arbeitsleitungen 19 Druckbegrenzungsventile 41 und 43 so geschaltet, dass eine Begrenzung des maximalen Differenzdruckes zwischen den Arbeitsleitungen 19 und 21 stattfindet. Zur Begrenzung des Systemdruckes in den sich an die Leitungsabschnitte 23 und 25 anschließenden Speicher-Verbindungsleitungen 29 und 31 sind je ein weiteres Druckbegrenzungsventil 45 und 47 zur Tankseite hin angeordnet. Zudem ermöglicht ein 3/2-Wegeventil 49, das über Steuerdruck von der Arbeitsleitung 19 oder der Arbeitsleitung 21 her druckbetätigt geöffnet werden kann, eine Ausspeisung zur Tankseite über ein den Ausspeisedruck begrenzendes Druckbegrenzungsventil 51. Zur Gewinnung eines Signales für den Druck in der Arbeitsleitung 19 an dem Leitungsabschnitt 23 der Arbeitsleitung 19 und damit an der damit zusammenhängenden Speicher-Verbindungsleitung 29 ist ein Druck-Spannungswandler 54 vorgesehen.

Der Speicherteil 33 weist einen Hochdruckspeicher 53 und einen Niederdruckspeicher 55 auf, denen jeweils ein Speichersicherheitsblock 57 vorgeschaltet ist, die in bei derartigen Speicheranordnungen üblicher, bekannter Weise ausgebildet sind, so dass sich eine nähere Beschreibung der Sicherheitsblöcke 57 erübrigt. Am Eingang 59 bzw. 61 jedes Sicherheitsblockes 57 ist eine Ventileinrichtung 63 bzw. 65 angeschlossen, wobei jede Ventileinrichtung 63 und 65 jeweils zwei 2/2-Wegenventile enthält, nämlich bei der Ventileinrichtung 63 des Hochdruckspeichers 53 ein Wegeventil V4.3 und ein Wegeventil V4.4, während die Ventileinrichtung 65 ein Wegeventil V4.1 und ein Wegeventil V4.2 aufweist. Sämtliche dieser Wegeventile sind mechanisch in den Sperrzustand vorgespannt und durch Ansteuerung ihres Betätigungsmagneten 67 elektrisch in den Öffnungszustand steuerbar.

Die Figur zeigt einen Betriebszustand, bei dem sämtliche elektromagnetisch steuerbaren Wegeventile stromlos sind. Dieser Zustand entspricht dem normalen Antriebszustand des Systems, ohne Beschleunigung oder Bremsen. Dabei sind die in den Leitungsabschnitten 23 und 25 der Arbeitsleitungen 19 bzw. 21 angeordneten Wegeventile V1 und V2 im Öffnungszustand, während sämtliche Wegeventile, die den Ventileinrichtungen 63 und 65 des Speicherteiles 33 zugehören, im Sperrzustand sind. Der Speicherteil 33 ist daher an den Speicherverbindungsleitungen 29 und 31 vom übrigen Kreislauf abgetrennt. Beim normalen Antriebszustand bestimmt sich daher die Leistung der Antriebseinheiten 5 und 7 ausschließlich nach der Förderleistung der Hydropumpe 13, wobei eine Einstellung auf Förderleistung Null einem Stillstand des betreffenden Fahrzeuges entsprechen kann.

Um nach einem Stillstand des Fahrzeuges das System in den Anfangs-Betriebszustand zu versetzen, bei dem zum Anfahren ein Beschleunigungsvorgang unter Mitwirkung des Speicherteiles 33 erfolgen kann, ist ein Ladeventil V3 in Form eines 4/2-Wegeventils vorgesehen, dessen erster Eingang 69 mit der ersten Arbeitsleitung 19 und dessen zweiter Eingang 71 mit der zweiten Arbeitsleitung 21 verbunden ist. Ausgänge 75 und 73 sind über eine erste Ladeleitung 79 bzw. eine zweite Ladeleitung 81 mit dem Eingang 61 am Hochdruckspeicher 53 bzw. dem Eingang 59 am Niederdruckspeicher 55 in Verbindung. Beide Speicher 53, 55 sind daher bei Ansteuerung des Betätigungsmagneten 83 des Ladeventils V3, das in den Schließzustand vorgespannt ist, auf das gewünschte Druckniveau aufzuladen, wobei Druck-Signalwandler 85 und 87 eine Anzeige der Ladedrücke liefern.

Wenn ein Beschleunigungsvorgang stattfinden soll, etwa für das Anfahren aus dem Stillstand oder für die Geschwindigkeitserhöhung beim Fahrbetrieb, werden die Betätigungsmagnete 27 der Wegeventile V1 und V2 angesteuert, um diese Ventile zu sperren. Dadurch wird der Leitungsabschnitt 23 der Arbeitsleitung 19 und der Leitungsabschnitt 25 der Arbeitsleitung 21 aufgetrennt. Vom hydraulischen Kreislauf wird daher von einem verbleibenden Teil, nämlich dem Versorgungsteil, der sich von der Hydropumpe 13 bis zur ersten Antriebseinheit 5 erstreckt, der Speicherteil 33 abgetrennt, zu dem die zweite Antriebseinheit 7 gehört. Während beim gezeigten Ausführungsbeispiel, bei dem zwei Antriebseinheiten 5 und 7 vorgesehen sind, nunmehr die Hydropumpe 13 weiterhin hydraulisch mit der ersten Antriebseinheit 5 verbunden bleibt, steht der aktivierte Speicherteil 33 für den gewünschten Beschleunigungsvorgang zur Verfügung, wobei der zweiten Antriebseinheit 7 aus dem Hochdruckspeicher 53 rückgewonnene Energie zugeführt wird. Zu diesem Zweck werden in den Ventileinrichtungen 63 und 65 jeweils durch Bestromen der Magnete 67 diejenigen Wegeventile in den Öffnungszustand gesteuert, die als Beschleunigungsventile dienen. Bei Vorwärtsbetrieb ist dies in der Ventileinrichtung 63 das Ventil V4.4, und bei der Ventileinrichtung 65 das Ventil V4.2. Dadurch wird über die Speicher-Verbindungsleitung 29 der Hochdruckspeicher 53 mit dem Anschluss A2 der zweiten Antriebseinheit 7 und über die Speicher-Verbindungsleitung 31 der Niederdruckspeicher 55 mit dem anderen Anschluss B2 der Antriebseinheit 7 verbunden. Somit wirkt die Druckenergie des Speichers 53 über den druckseitigen Eingang der Antriebseinheit 7, während der niederdruckseitig aus der Antriebseinheit 7 ausgegeben Volumenstrom über die Speicher-Verbindungsleitung 31 dem Niederdruckspeicher 55 zugeführt wird.

Wenn im Gegensatz hierzu ein Bremsvorgang stattfinden soll, wobei wiederum die Wegeventile V1 und V2 geschlossen und der Speicherteil 33 daher an den Abschnitten 23 und 25 vom Versorgungskreis abgetrennt ist, werden die in den Ventileinrichtungen 63 und 65 des Speicherteiles enthaltenen Wegeventile V4.3 und V4.1, die als Bremsventile dienen, in den Öffnungszustand gesteuert. Somit ist nunmehr der Hochdruckspeicher 53 mit dem Anschluss B2 der Antriebseinheit 7 in Verbindung, deren anderer Anschluss A2 mit dem Niederdruckspeicher 55 verbunden ist, so dass die im Hochdruckspeicher 53 gespeicherte Druckenergie als Verzögerungsenergie zurückgewonnen wird, die an der zweiten Antriebseinheit 7 wirksam ist.

Vorstehend ist die Betriebsweise des Systems anhand des Vorwärtsbetriebs oder der Vorwärtsfahrt beschrieben. Da die Hydropumpe 13 eine Verstellpumpe ist, so dass zwei Volumenstromrichtungen möglich sind, ist das System ohne weiteres im Rückwärtsbetrieb betreibbar. Von den in den Ventileinrichtungen 63 und 65 des Speicherteiles 33 befindlichen Wegenventilen fungieren im Rückwärtsbetrieb nunmehr die Wegeventile V4.3 und V4.1 als Beschleunigungsventile, während die Wegeventile V4.4. und V4.2 nunmehr als Bremsventile fungieren.

Während zwei Antriebseinheiten 5 und 7 beim gezeigten Ausführungsbeispiel vorhanden sind, könnte mit lediglich einer Antriebseinheit gearbeitet werden, die sowohl bei normalem Antriebszustand als auch bei Beschleunigungs- und Bremsvorgängen wirksam ist. Mit anderen Worten gesagt, könnte bei der Darstellung entsprechend der vorliegenden Figur die Antriebseinheit 5 weggelassen sein. Gegenüber einer solchen Ausführungsform ist jedoch das hier beschriebene Beispiel insofern vorteilhaft, als sowohl beim normalen Antriebszustand, also bei geöffneten Ventilen V1 und V2 und inaktivem Speicherteil 33, beide Antriebseinheiten 5 und 7 wirksam sind, und dass auch bei geschlossenen Ventilen V1 und V2 die erste Antriebseinheit 5 im Versorgungsteil des Kreislaufes aktiv verbleibt und von der Hydropumpe 13 entsprechend betätigt wird. Da die zweite Antriebseinheit 7 eine Verstell-Motorpumpe ist mit zwei gegenläufigen Volumenstromrichtungen, ist eine Funktion des hydrostatischen Antriebssystems gewährleistet, auch wenn die Ventilbaugruppen V4.1 und V4.3 oder V4.2 und V4.4 entfallen sollten.

## Patentansprüche

1. Hydrostatisches Antriebssystem, mit einer motorisch antreibbaren Hydropumpe (13), die unter Bildung eines hydraulischen Kreislaufes über eine erste (19) und eine zweite Arbeitsleitung (21) mit zumindest einer hydraulischen Antriebseinheit (7) verbunden ist, die mit einem Radsatz (1, 3) verbunden ist, mit einem ersten Hydrospeicher (53) zum Speichern von Druckenergie, der mit einer der Arbeitsleitungen (19, 21) verbindbar ist, und einem mit der jeweils anderen Arbeitsleitung (19, 21) verbindbaren zweiten Hydrospeicher (55) und mit einer Ventileinrichtung (V1, V2), durch die der jeweils zu der Antriebseinheit (7) verlaufende Abschnitt (23, 25) jeder Arbeitsleitung (19 bzw. 21) auftrennbar ist, um von dem die Hydropumpe (13) enthaltenden Teil des Kreislaufes einen Speicherteil (33) abzutrennen, der die Hydrospeicher (53, 55) und die zumindest eine Antriebseinheit enthält, wobei zwei gesonderte hydraulische Antriebseinheiten (5 und 7) vorgesehen und funktionsmäßig miteinander in Wirkverbindung sind, **dadurch gekennzeichnet, dass** mittels der Ventileinrichtung (V1, V2) der jeweils zwischen den Antriebseinheiten (5, 7) verlaufende Abschnitt (23, 25) jeder Arbeitsleitung (19, 21) auftrennbar ist.

2. Hydrostatisches Antriebssystem nach Anspruch 1, **dadurch gekennzeichnet, dass** die Antriebseinheiten (5, 7) mechanisch miteinander gekuppelt sind.

3. Hydrostatisches Antriebssystem nach Anspruch 1 oder 2, **dadurch gekennzeichnet, dass** die Ventileinrichtung in jeder Arbeitsleitung ein Wegeventil (V1, V2) aufweist, die in den Öffnungszustand vorgespannt und durch elektromagnetische Betätigung in den Sperrzustand steuerbar sind.

4. Hydrostatisches Antriebssystem nach einem der Ansprüche 1 bis 3, **dadurch gekennzeichnet, dass** der Speicherteil (33) eine zweite Ventileinrichtung (63), die mit dem ersten Hydrospeicher, der als Hochdruckspeicher (53) zum Speichern von Druckenergie dient, verbunden ist, und eine dritte Ventileinrichtung (65) aufweist, die mit dem zweiten, als Niederdruckspeicher dienenden Hydrospeicher (55) verbunden ist.

5. Hydrostatisches Antriebssystem nach Anspruch 4, **dadurch gekennzeichnet, dass** die zweite und die dritte Ventileinrichtung (63, 65) des Speicherteiles (33) beide je ein Beschleunigungsventil (V4.4 und V4.2) aufweisen, die für einen Beschleunigungsvorgang in den Öffnungszustand steuerbar sind, um zur Rückgewinnung gespeicherter Druckenergie den Hochdruckspeicher (53) mit der die Antriebs-Druckversorgung der dem Speicherteil (33) zugehörigen Antriebseinheit (7) bewirkenden ersten Arbeitsleitung (19) zu verbinden und den Niederdruckspeicher (55) mit der anderen, zweiten Arbeitsleitung (21) zu verbinden.

6. Hydrostatisches Antriebssystem nach Anspruch 4 oder 5, **dadurch gekennzeichnet, dass** die zweite und die dritte Ventileinrichtung (63, 65) des Speicherteiles (33) beide je ein Bremsventil (V4.3 und V4.1) aufweisen, die für einen Bremsvorgang in den Öffnungszustand steuerbar sind, um zur Speicherung von Druckenergie die zweite Arbeitsleitung (21) mit dem Hochdruckspeicher (53) und die andere, erste Arbeitsleitung (19) mit dem Niederdruckspeicher (55) zu verbinden.

7. Hydrostatisches Antriebssystem nach den Ansprüchen 5 und 6, **dadurch gekennzeichnet, dass** Beschleunigungsventile und Bremsventile jeweils durch in den Sperrzustand vorgespannte und durch elektromagnetische Betätigung in den Öffnungszustand steuerbare Wegeventile (V4.1, V4.2, V4.3 und V4.4) gebildet sind.

8. Hydrostatisches Antriebssystem nach einem der Ansprüche 1 bis 7, **dadurch gekennzeichnet, dass** ein Nachladeventil in Form eines in den Sperrzustand vorgespannten 4/2-Wegeventils (V3) vorgesehen ist, das durch elektromagnetische Betätigung in einen Öffnungszustand steuerbar ist, in dem es die Hochdruckseite der Hydropumpe (13) mit dem als Hochdruckspeicher (53) dienenden Hydrospeicher und die Niederdruckseite der Hydropumpe (13) mit dem Niederdruckspeicher (55) verbindet.

## Claims

1. A hydrostatic drive system having a motor-driveable hydraulic pump (13) that is connected to at least one hydraulic drive unit (7) by means of a first (19) and a second (21) working line, thus forming a hydraulic circuit, said drive unit being connected to a gear set (1, 3), having a first hydraulic accumulator (53) for the storage of pressure energy and which can be connected to one of the working lines (19, 21), and a second hydraulic accumulator (55) which can be connected to the respective other working line (19, 21), and having a valve device (V1, V2) by means of which the section (23, 25) of each working line (19 or 21) which respectively runs to the drive unit (7) can be separated in order to separate an accumulator part (33) from the part of the circuit containing the hydraulic pump (13), said accumulator part containing the hydraulic accumulators (53, 55) and the at least one drive unit, two separate hydraulic drive units (5 and 7) being provided and being operatively connected to one another for function, **characterised in that** by means of the valve device (V1, V2) the section (23, 25) of each working line (19, 21) respectively running between the drive units (5, 7) can be separated.

2. The hydrostatic drive system according to Claim 1, **characterised in that** the drive units (5, 7) are mechanically coupled to one another.

3. The hydrostatic drive system according to Claim 1 or 2, **characterised in that** the valve device has in each working line a directional valve (V1, V2) which is preloaded into the open state and can be controlled by electromagnetic actuation into the blocked state.

4. The hydrostatic drive system according to any of Claims 1 to 3, **characterised in that** the accumulator part (33) has a second valve device (63) which is connected to the first hydraulic accumulator which is used as a high pressure accumulator (53) for the storage of pressure energy, and has a third valve device (65) which is connected to the second hydraulic accumulator (55) which is used as a low pressure accumulator.

5. The hydrostatic drive system according to Claim 4, **characterised in that** the second and third valve devices (63, 65) of the accumulator part (33) both have one acceleration valve (V4.4 and V4.2) each, which can be controlled into the open state for an acceleration process in order for the recovery of stored pressure energy to connect the high pressure accumulator (53) to the first working line (19) which brings about the drive pressure supply of the drive unit (7) which belongs to the accumulator part (33) and to connect the low pressure accumulator (55) to the other, second working line (21).

6. The hydrostatic drive system according to Claim 4 or 5, **characterised in that** the second and the third valve devices (63, 65) of the accumulator part (33) both have one brake valve (V4.3 and V4.1) each which can be controlled into the open state for a braking process in order to connect the second working line (21) to the high pressure accumulator (53) and to connect the other, first working line (19) to the low pressure accumulator (55) for the storage of pressure energy.

7. The hydrostatic drive system according to Claims 5 and 6, **characterised in that** the acceleration valves and the brake valves are each formed by directional valves (V4.1, V4.2) which can be controlled into the open state by electromagnetic actuation and which are preloaded into the blocked state.

8. The hydrostatic drive system according to any of Claims 1 to 7, **characterised in that** a recharging valve is provided in the form of a 4/2-way valve (V3) which is preloaded into the blocked state and which can be controlled into an open state by electromagnetic actuation, in which state it connects the high pressure side of the hydraulic pump (13) to the hydraulic accumulator which is used as the high pressure accumulator (53) and the low pressure side of the hydraulic pump (13) to the low pressure accumulator (55).

## Revendications

1. Système d'entraînement hydrostatique comprenant une pompe (13) hydraulique, qui peut être entraînée par un moteur et qui communique avec formation d'un circuit hydraulique par l'intermédiaire d'un premier (19) et d'un deuxième (21) conduits de travail avec au moins un groupe (7) d'entraînement hydraulique, qui est relié à un essieu (1,3), comprenant un premier accumulateur (53) hydraulique pour accumuler de l'énergie de pression, qui peut communiquer avec l'un des conduits (19, 21) de travail, et un deuxième accumulateur (55) hydraulique, qui peut communiquer avec respectivement l'autre conduit (19, 21) de travail, et comprenant un dispositif (V1, V2) de vanne, par lequel la partie (23, 25), s'étendant respectivement vers le groupe (7) d'entraînement, de chaque conduit (19 et 21) de travail peut être séparée pour séparer de la partie du circuit, comportant la pompe (13) hydraulique, une partie (33) d'accumulation, qui comporte l'accumulateur (53, 55) hydraulique et le au moins un groupe d'entraînement, deux groupes (5 et 7) d'entraînement hydraulique particulier étant prévus et étant en liaison d'action fonctionnellement l'un avec l'autre, **caractérisé en ce que** la partie (23, 25), s'étendant respectivement entre les groupes (5, 7) d'entraînement, de chaque conduit (19, 21) de travail peut être séparée au moyen du dispositif (V1, V2) de vanne.

2. Système d'entraînement hydrostatique suivant la revendication 1, **caractérisé en ce que** les groupes (5, 7) d'entraînement sont accouplés mécaniquement entre eux.

3. Système d'entraînement hydrostatique suivant la revendication 1 ou 2, **caractérisé en ce que** le dispositif de vanne dans chaque conduit de travail a une vanne (V1, V2) à plusieurs voies, qui est précontrainte dans l'état d'ouverture et qui peut être mise dans l'état de fermeture par un actionnement électromagnétique.

4. Système d'entraînement hydrostatique suivant l'une des revendications 1 à 3, **caractérisé en ce que** la partie (33) d'accumulation a un deuxième dispositif (63) de vanne, qui communique avec le premier accumulateur hydraulique servant d'accumulateur (53) de haute pression pour accumuler de l'énergie de pression, et un troisième dispositif (62) de vanne, qui communique avec le deuxième accumulateur (55) hydraulique servant d'accumulateur de basse pression.

5. Système d'entraînement hydrostatique suivant la revendication 4, **caractérisé en ce que** le deuxième et le troisième dispositifs (63, 65) de vanne de la partie (33) d'accumulation ont tous deux respectivement une vanne (V4.4 et V4.2) d'accélération, qui peuvent être commandées, dans un passage accéléré à l'état d'ouverture, pour récupérer de l'énergie de pression accumulée, afin de mettre l'accumulateur (53) de haute pression en communication avec le premier conduit (19) de travail, en provoquant l'alimentation en pression d'entraînement du groupe (7) d'entraînement associé à la partie (33) d'accumulation et afin de mettre l'accumulateur (55) de basse pression en communication avec l'autre deuxième conduit (21) de travail.

6. Système d'entraînement hydrostatique suivant la revendication 4 ou 5, **caractérisé en ce que** le deuxième et le troisième dispositifs (63, 65) de vanne de la partie (33) d'accumulation ont tous deux respectivement une vanne (V4.3 et V4.1) de freinage, afin de mettre, pour accumuler de l'énergie de pression, le deuxième conduit (21) de travail en communication avec l'accumulateur (53) de haute pression et l'autre premier conduit (19) de travail en communication avec l'accumulateur (55) de basse pression.

7. Système d'entraînement hydrostatique suivant les revendications 5 et 6, **caractérisé en ce que** les vannes d'accélération et les vannes de freinage sont formées respectivement par des vannes (V4.1, V4.2, V4.3 et V4.4) à plusieurs voies précontraintes respectivement dans l'état de fermeture et pouvant être mises dans l'état d'ouverture par un actionnement électromagnétique.

8. Système d'entraînement hydrostatique suivant l'une des revendications 1 à 7, **caractérisé en ce qu'**il est prévu une vanne de recharge sous la forme d'une vanne (V3) à 4/2 voies précontrainte dans l'état de fermeture, qui peut, par un actionnement électromagnétique, être mise dans un état d'ouverture, dans lequel elle met le côté de haute pression de la pompe (13) hydraulique en communication avec l'accumulateur hydraulique servant d'accumulateur (53) de haute pression et le côté basse pression de la pompe (13) hydraulique en communication avec l'accumulateur (55) de basse pression.
